# EUROPÄISCHE PATENTSCHRIFT

(11) **EP 2 432 310 B1**
(45) Veröffentlichungstag und Bekanntmachung des Hinweises auf die Patenterteilung: **16.01.2013**
(21) Anmeldenummer: 10716299.2
(22) Anmeldetag: 24.04.2010
(51) Int. Cl.: A01B 63/111

(54) **ANORDNUNG ZUR HUBREGELUNG EINES HUBWERKZEUGS EINES FAHRZEUGS UND VERFAHREN ZUR HUBREGELUNG**
ARRANGEMENT FOR CONTROLLING THE STROKE OF A STROKING TOOL OF A VEHICLE AND METHOD FOR CONTROLLING STROKE
SYSTÈME DE RÉGLAGE DE COURSE D'UN OUTIL DE LEVAGE D'UN VÉHICULE ET PROCÉDÉ DE RÉGLAGE DE COURSE

(30) Priorität: 22.05.2009 DE 102009022410
(43) Veröffentlichungstag der Anmeldung: 28.03.2012
(73) Patentinhaber: Robert Bosch GmbH, 70469 Stuttgart (DE)
(72) Erfinder: MUELLER, Gerold, 70563 Stuttgart (DE)
(74) Vertreter: Thürer, Andreas
(86) Internationale Anmeldenummer: PCT/EP2010/002538
(87) Internationale Veröffentlichungsnummer: WO 2010/133285

(56) Entgegenhaltungen:
- EP-A1- 0 655 185
- EP-A2- 0 112 642
- US-A- 5 684 691

## Beschreibung

Die Erfindung betrifft eine Anordnung zur Hubregelung eines Hubwerkzeugs eines Fahrzeugs und ein Verfahren zur Hubregelung. Dazu weist die Anordnung ein Steuergerät auf, das einen Lageregler und einen Kraftregler aufweist, die mit einem steuerbaren Hydraulikventil für das Hubwerkzeug zusammenwirken. Das Hydraulikventil ist dem Lage- und dem Kraftregler nachgeschaltet und setzt Steuersignale des Lage- und des Kraftreglers in Hubbewegungen des Hubwerkzeugs mittels eines Hubwerkzylinders um.

Eine derartige Anordnung zur Hubregelung eines Hubwerkzeugs eines Fahrzeugs ist aus der Druckschrift EP 0 212 304 B2 bekannt, wobei die bekannte Anordnung eine elektrohydraulische Einrichtung zum Regeln eines Hubwerks an einem landwirtschaftlichen Arbeitsfahrzeug, insbesondere eines Pfluges an einem Traktor mit einem Regelkreis zum Beeinflussen der Lage des Hubwerks aufweist. In dem Regelkreis sind dazu wenigstens ein Lagesensor, ein Kraftsensor sowie ein Sollwertgeber angeordnet. Abhängig von den Signalen dieser Sollwertgeber und Regler werden eine hydraulische Ventileinrichtung und ein hydraulisch betätigbarer Motor gesteuert.

Ferner werden gemäß EP 0 212 304 B2 an einem Summenpunkt diesen Signalen zusätzlich ein Signal eines Sensors, der den Schlupf der angetriebenen Räder misst, hinzugefügt und dem Istwertsignal des Kraftsensors aufgeschaltet. Das Ausgangssignal des Kraftsensors geht an den Eingang einer Mischvorrichtung, die an einem ersten Eingang das Istwertsignal des Lagesensors und an einem zweiten Eingang das Ausgangssignal des Kraftsensors zuführt. Dazu weist ein Bedienpult einen Steiler auf, mit dem das Verhältnis der Signale von Lageregler und Kraftregler verstellbar ist.

Neben dem Hauptschalter zum Ein- und Ausschalten des Hubwerks ist ein Schalter für ein Heben und Senken des Hubwerks und neben dem Steller für die Mischposition sind weitere Steller für einen oberen Endanschlag sowie ein Steller für die Einstellung einer Senkgeschwindigkeit als weitere Bedienelemente für das Hubwerk vorgesehen. Eine derart komplexe Bedienung ist für entsprechende Fahrer in Europa kein Problem, jedoch in Märkten mit bisher einfachen, kleinen und im Allgemeinen sogar mechanischen Hubwerksregelungen zeigt es sich, dass die Bedienung zu komplex ist und aufgrund der Anzahl notwendiger Bedienelemente auch zu teuer ist.

Die EP 0 655 185 A 1 offenbart ein Verfahren und eine Vorrichtung zur Steuerung der Lage eines landwirtschaftlichen Arbeitsgerätes, das an einen Traktor angekoppelt ist sowie der auf ihn einwirkenden Zugkraft. Insbesondere betrifft sie ein Verfahren und eine Vorrichtung zur gemischten Steuerung, wobei elektronisch die Anzeigen von Zugkraftfühlern und Lagefühlern im Zusammenhang mit der von der Bedienungsperson gewählten Regelung berücksichtigt werden.

Die EP 0 112 642 A2 offenbart ein Arbeitstiefensteuerungssystem für ein Bodenbearbeitungswerkzeug.

Aufgabe der Erfindung ist es, eine Anordnung zur Hubregelung eines Hubwerkzeugs sowie ein Verfahren zur Hubregelung zu schaffen, das eine deutliche Vereinfachung des Bedienkonzeptes bzw. eines entsprechenden Bedienpults ermöglicht und zusätzlich eine Kraftregelstrategie aufweist, die mindestens den gleichen Komfort wie bisherige Hubregelungen für Hubwerkzeuge liefert.

Gelöst wird diese Aufgabe mit dem Gegenstand der unabhängigen Ansprüche. Vorteilhafte Weiterbildungen der Erfindung ergeben sich aus den abhängigen Ansprüchen.

Erfindungsgemäß wird eine Anordnung zur Hubregelung eines Hubwerkzeugs eines Fahrzeugs und ein Verfahren zur Hubregelung geschaffen. Dazu weist die Anordnung ein Steuergerät auf, das einen Lageregler und einen Kraftregler besitzt, die mit einem steuerbaren Hydraulikventil für das Hubwerkzeug zusammenwirken. Das Hydraulikventil ist dem Lage- und dem Kraftregler nachgeschaltet und setzt Steuersignale des Lage- und des Kraftreglers in Hubbewegungen des Hubwerkzeugs mittels eines Hubwerkzylinders um. Ferner weist die Anordnung einen Zugkraftmesser zur Messung der Kraft mit der das Hubwerkzeug gezogen wird und einen Hubwerkspositionsmesser zur Messung der Lage, in der sich das Hubwerkzeug befindet auf. Das Steuergerät weist eine zentrale Steuereinheit auf, die bei einem an einem Bedienpult des Hubwerkzeugs eingestellten und erreichten Lagesollwert für eine begrenzte Zeit oder eine begrenzte Fahrstrecke bei eingeschalteter Kraftregelung automatisch einen mittleren Kraftaufwand als Sollwert für die Zugkraft bildet, bevor die Kraftregelung mit diesem Sollwert automatisch arbeitet, indem der automatisch ermittelte Sollwert einem Differenzglied zuführt wird, das als Regelgröße die Differenz zwischen dem automatisch ermittelten Sollwert und einem Istwert eines Zugkraftmessers dem Kraftregler zuführt.

Ein Vorteil dieser Anordnung und dieser Regelstruktur ist eine deutliche Vereinfachung der Bedienung des Hubwerkzeugs, da das Bedienpult lediglich einen Hauptschalter und einen weiteren Schalter sowie ein einziges Stellglied zur Vorgabe der Arbeitslage des Hubwerkzeugs aufweist. Bei eingeschalteter Kraftregelung, die mit dem weiteren Schalter aktiviert werden kann, wird der Kraftsollwert anhand des für eine begrenzte Zeit oder für eine begrenzte Wegstrecke gemessenen Mittelwerts der Kraft ohne Vorgabe durch den Bediener eingestellt. Zudem kann aufgrund der Regelstrategie anstatt zweier Kraftsensoren nur ein einziger Kraftsensor eingesetzt werden, was zusätzlich die Systemkosten senkt, ohne dass der Regelkomfort und die Regelgenauigkeit vermindert wird.

Im Prinzip braucht das Bedienpersonal lediglich das Hubwerkzeug einzuschalten und eine Kraftregelung anzufordern sowie mit dem einzigen Stellglied des Bedienpults ein Heben oder Senken des Hubwerkzeugs vorzugeben. Der damit durch das Bedienpersonal festgelegte Lagesollwert wird so lange beibehalten, bis automatisch ohne das Zutun des Bedienpersonals die eingeschaltete Kraftregelung einen entsprechenden Mittelwert und damit einen Sollwert für die Kraftregelung selbsttätig ermittelt hat und die Anlage auf Kraftregelung automatisch umstellt. Während bisher das Bedienpersonal die Empfindlichkeit der Kraftregelung durch Verstellen eines Mischpotentiometers in Richtung Lageregelung kontinuierlich reduzieren konnte, wird bei dem erfindungsgemäßen Regelungskonzept die Empfindlichkeit der Kraftregelung adaptiv selbst eingestellt, indem Wechselanteile des Kraftsignals und des Lagesignals durch geeignete Filterparameter und/oder variable Totzonen um den Mittelwert so eingestellt werden, dass die Hubwerksbewegungen aufgrund der Regelabweichung in Amplitude und Frequenz optimal den Erwartungen und Erfahrungen mit Hubwerkzeugen entsprechen.

Während das bekannte elektrohydraulische Regelungssystem für die Kraftregelung direkt einen Kraftsollwert über das Bedienpult vorgibt, der bei gegebenen Arbeitsverhältnissen einer bestimmten Arbeitstiefe entspricht, ist es notwendig, rechts und links am Unterlenker Kraftsensoren vorzusehen, deren Signale im Steuergerät ermittelt werden. Dadurch wird bei dem Regelkonzept gemäß dem Stand der Technik vermieden, dass sich beispielsweise nach dem Wenden eines Pfluges auf der Rückfahrt über den Acker eine andere Arbeitstiefe einstellt als auf der Hinfahrt. Bei dem erfindungsgemäßen Regelkonzept spielt jedoch diese Tatsache keine Rolle, da die Arbeitstiefe eingestellt wird und die Zugkraft jeweils gemessen wird. Das bedeutet, dass absolute Kraftniveau bei eingestellter Tiefe spielt gar keine Rolle. Deshalb kommt das erfindungsgemäße Regelungskonzept mit einem einzigen Kraftsensor auf einer der beiden Seiten rechts oder links vollständig aus.

Bei einer Ausführungsform der Erfindung ist in der Anordnung zur Hubregelung vorzugsweise das steuerbare Hydraulikventil einer Mischwerteinrichtung, die einen Mischwert aus Stellwerten des Lagereglers und Stellwerten des Kraftreglers bildet, nachgeschaltet. Darüber hinaus weist die Anordnung einen Funktionsblock auf, in dem zur Parameteradaption ein jeweiliger Wechselanteil eines Filterblockes der Zugkraftmessung adaptiert wird und dem Kraftregler über den Funktionsblock zugeführt wird. Außerdem kann der Funktionsblock zur Parameteradaption Messwerte eines Schlupfsensors, der vom Schlupf der angetriebenen Räder abhängige Signale generiert, dem Kraftregler zuführen.

Als zentrale Steuereinheit in dem Steuergerät ist vorzugsweise ein Mikroprozessor vorgesehen, der einerseits das Zeitintervall und/oder die Wegstrecke, für die der Mittelwert der Zugkraft ermittelt wird, vorgibt und einen entsprechenden Triggerimpuls an eine Einrichtung zur Mittelwertbildung übermittelt.

Das Stellglied des Bedienpults zur Einstellung des Lagesollwertes kann vorzugsweise ein Drehpotentiometer oder ein Schiebepotentiometer sein. Außerdem ist der Hauptschalter in einer weiteren Ausführungsform der Erfindung mit dem Stellglied derart mechanisch gekoppelt, dass ein Ausschalten des Hauptschalters nur im oberen Anschlag des Stellglieds zur Einstellung des Lagesollwertes betätigbar ist. Der Hauptschalter kann jederzeit betätigt werden. Durch die Betätigung wird das Hubwerk in der aktuellen Position verriegelt. Der Hauptschalter ist optional. Aus Sicherheitsgründen ist nur in einem festgelegten unteren Lagebereich die automatische Kraftsollermittlung möglich, um ein unbeabsichtigtes Absenken während einer Transportfahrt zu vermeiden. Wenn der Fahrer vergessen haben sollte, die Kraftregelung mit dem hierfür vorgesehenen weiteren Schalter zu deaktivieren, bleibt die Kraftregelung aktiviert, bis diese im oberen Hubwerksbereich deaktiviert ist. Das Hubwerk wird dann in seiner Lageregelung bewegt.

Ein Verfahren zur Hubregelung eines elektrohydraulischen Hubwerkzeugs weist die nachfolgenden Verfahrenschritte auf. Zunächst wird ein Lagesollwert für das Hubwerkzeug an einem Bedienpult eingestellt, wobei ein Lageregler aktiviert wird. Zum Erreichung des Lagesollwertes erfolgt ein Messen der Hubwerksposition mit einem Hubwerkspositionsmesser und ein Regeln auf den eingestellten Lagesollwert durch einen Lageregler.

Ist an dem Bedienpult ein Schalter für die Zugkraftregelung eingeschaltet, so wird eine zentrale Steuereinheit in dem Steuergerät aktiviert und eine automatische Mittelwertbildung der Zugkraft mittels Messen der Zugkraft für ein begrenztes Zeitintervall oder für eine begrenzte Fahrstrecke nach Erreichen des Lagesollwertes automatisch durchgeführt, indem ein Triggerimpuls nach der Zeit- und/oder Wegmessung von einer zentralen Steuereinheit an einen Mittelwertbildungsblock erfolgt. Abschließend wird der automatisch erfasste Mittelwert der Zugkraft als Sollwert für den Kraftregler einem Differenzglied zugeführt. Danach erfolgt die Differenzbildung zwischen Mittelwert bzw. Sollwert und Augenblickswert bzw. Istwert der Zugkraft als Regelgröße für den Kraftregler durch das Differenzglied.

Dieses Verfahren hat den Vorteil, dass lediglich der Lagesollwert von einem Bedienpult aus vorzugeben ist und bei Erreichen des Sollwerts automatisch ein Erfassen eines Sollwerts für den Kraftregler erfolgt, ohne dass das Bedienpersonal eingreifen muss, wenn zusätzlich zum Hauptschalter ein weiterer Schalter des Bedienpults eingeschaltet ist. Dabei ist in dem Regelungsverfahren vorgesehen, dass nach der Mittelwertbildung automatisch von der Lageregelung in die Kraftregelung gewechselt wird und die Kraftregelung so lange beibehalten wird, bis erneut eine Lageänderung vom Bedienpult aus veranlasst wird.

Die begrenzte Zeitspanne bzw. die begrenzte Wegstrecke wird durch das Steuergerät mit Hilfe einer zentralen Steuereinheit überwacht, die einen Triggerimpuls generiert, der nach dem Zeitinterwall oder der Fahrstrecke zur Messung der Zugkräfte bei erreichter Hubwerkposition die automatische Mittelwertbildung durch den Mittelwertbildungsblock zur Ermittlung eines Gleichanteils und Sollwertes der Zugkraft auslöst. Gleichzeitig kann eine Parameteradaption der Wechseianteile der Zugkraft durchgeführt und dem Kraftregler zugeführt werden. Bei Änderung des Lagesollwertes am Bedienpult wird automatisch von der Kraftregelung auf Lageregelung umgeschaltet und es werden erneut die Verfahrensschritte zur automatischen Kraftregelung nach Erreichen des Lagesollwerts durchgeführt. Dabei wird wie bereits oben erwähnt die Empfindlichkeit der Kraftregelung adaptiv selbst eingestellt, indem ein Wechselanteil des Zugkraftmesssignals und des Lagemesssignals durch Filterparameter und/oder Totzonen um den automatisch ermittelten Mittelwert derart eingestellt wird, dass die Hubwerkbewegungen aufgrund von Regelabweichungen in Amplitude und Frequenz Erfahrungswerten optimal angepasst werden.

Das Anbaugerät kann beispielsweise ein Pflug an einem Traktor sein, der durch Veränderung des Lagesollwertes abgesenkt wird, bis die gewünschte Arbeitstiefe erreicht ist. Bei Veränderung des Sollwertes durch den Bediener wechselt der Regler automatisch in den Lageregelmodus. Wird der Sollwert jedoch nicht mehr verändert, wird ein Kraftsignal, das durch vorzugsweise einen Kraftsensoren erzeugt wird, für eine bestimmte Zeit t1 oder eine bestimmte Fahrstrecke S1 gemessen. Während dieser Zeit und/oder dieser Strecke wird der Mittelwert des bis dahin gemessenen Kraftsignals als Sollwert für die Kraftregelung eingesetzt. Der Regler wechselt dann automatisch von der Lage- in die Kraftregelung. Die Kraftregelung bleibt so lange aktiv, wie einerseits die Regelung durch den weiteren Schalter aktiviert ist oder bis der Bediener den Lagesollwert manuell über das Stellglied des Bedienpults erneut verändert.

Die Erfindung wird nun anhand der beigefügten Figuren näher erläutert.
- Figur 1: zeigt ein schematisches Blockschaltbild einer Anordnung zur Hubregelung eines Hubwerkzeugs;
- Figur 2: zeigt eine schematische Darstellung einer Regelstruktur zur Regelung der Hubbewegung eines Hubwerkzeugs.

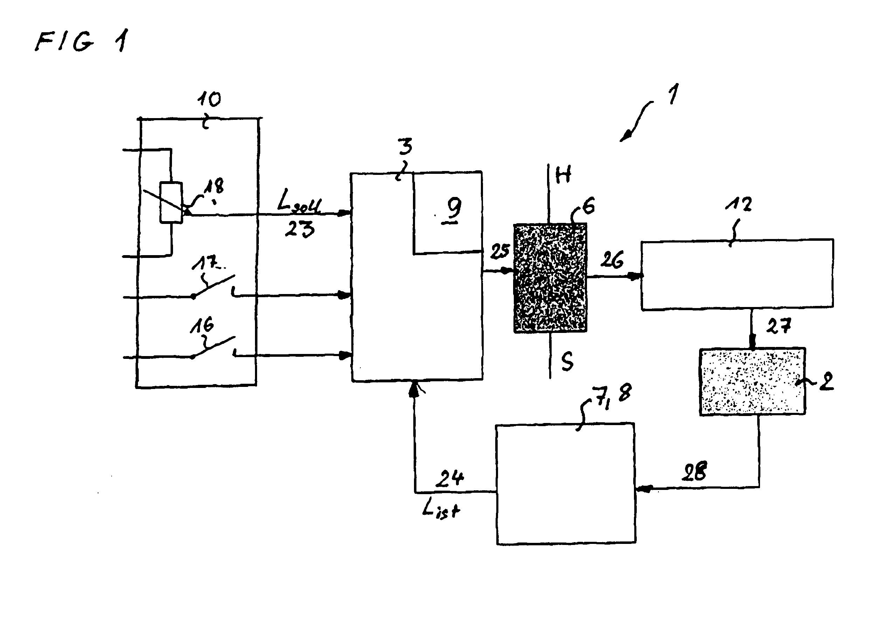

Figur 1 zeigt ein schematisches Blockschaltbild einer Anordnung 1 zur Hubregelung eines Hubwerkzeugs 2, das an einem Fahrzeug beispielsweise einem Traktor angeordnet ist, der beispielsweise einen Wendepflug trägt, der in einer vorgegebenen Arbeitstiefe ein Feld in zwei unterschiedlichen Richtungen durchpflügen kann. Dazu ist eine robuste und einfach bedienbare Anordnung erforderlich, die es auch ungeschultem Personal ermöglicht, ein elektrohydraulisches Hubwerkzeug 2 fachgerecht zu bedienen.

Dazu weist das Hubwerkzeug 2 ein Bedienpult 10, das an dem Fahrzeug angeordnet ist, auf. Dieses Bedienpult 10 verfügt über einen Hauptschalter 16, der das Hubwerkzeug 2 aktiviert. Ein weiterer Schalter 17 ist dafür vorgesehen, eine Kraftregelung anzufordern. Das Bedienpult 10 verfügt lediglich über ein einziges Stellglied, das vorzugsweise ein Drehpotentiometer oder ein Schiebepotentiometer sein kann, um das Senken und Heben des Hubwerks auf einen Sollwert Lₛₒₗₗ nach Einschalten des Hauptschalters 16 zu ermöglichen. Dieser Lagesollwert Lₛₒₗₗ wird über eine Signalleitung 23 einem Steuergerät 3 zugeführt, das einen Lageregler aufweist, wobei die Istlage von einem entsprechenden Hubwerkpositionssensor 8 dem Steuergerät 3 über die Messleitung 24 zugeführt wird.

Der Hubwerkpositionsmesser 8 liefert einen Lageistwert Lᵢₛₜ, der einem Differenzglied in dem Steuergerät 3 zugeführt wird und die Differenz zwischen Lageistwert Lᵢₛₜ und Lagesollwert Lₛₒₗₗ als Regelgröße einem im Steuergerät 3 angeordneten Lageregler zuführt. Der Lageregler ist über eine Steuerleitung 25 mit einem Hydraulikventil 6 verbunden, das in Richtung H ein Heben des Hubwerkzeugs veranlasst und in Richtung S ein Senken des Hubwerkzeugs ermöglicht. Das Hydraulikventil 6 veranlasst eine entsprechende Hub- oder Senkbewegung des Hubwerkzeugs, indem es über mindestens eine Hydraulikleitung 26 einen Hubwerkzylinder 12 antreibt.

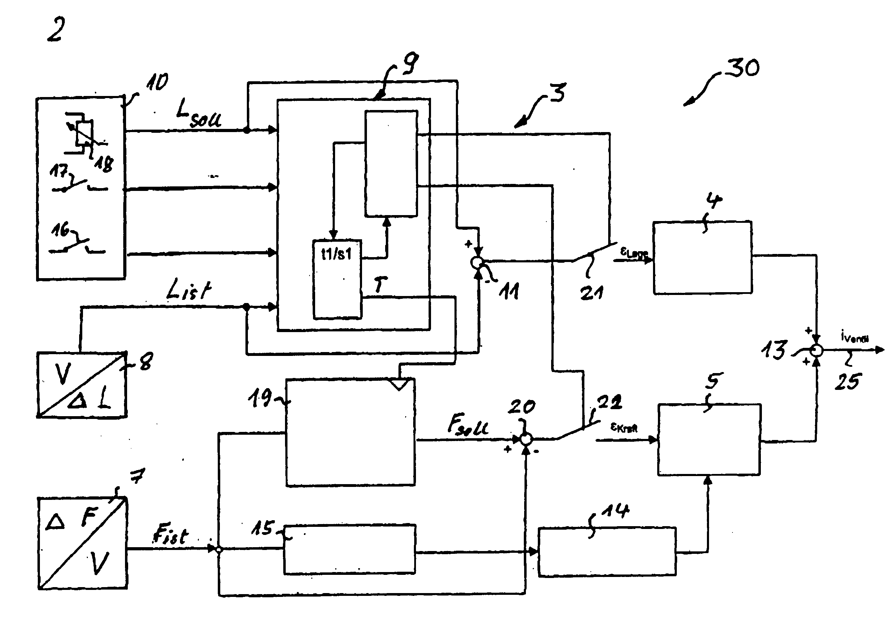

Der Hubwerkzylinder 12 verfährt über eine mechanische Verbindung 27 das Hubwerkzeug 2 in die Solllage, wobei die aktuelle Lageposition über eine Verbindung 28, den Hubwerkpositionsmesser 8 und die Messleitung 24 an das Steuergerät 3 rückgekoppelt wird. Bei Einstellung des weiteren Schalters 17 auf Kraftregelung erfolgt nach Erreichen des Lagesollwerts eine automatische Ermittlung des Kraftsollwerts von einer zentralen Steuereinheit 9 in dem Steuergerät 3, ohne dass ein Eingriff über das Bedienpult 10 in das Steuergerät 3 durch das Bedienpersonal erfolgt. Dieses wird anhand der nachfolgenden Figur 2 näher erläutert.

Figur 2 zeigt eine schematische Darstellung einer Regelstruktur 30 zur Regelung der Hubbewegung des in Figur 1 gezeigten Hubwerkzeugs 2. Dazu sind zwei Regler, ein Lageregler 4 und ein Kraftregler 5, in einem Steuergerät 3 vorgesehen. Der Lageistwert Lᵢₛₜ wird durch einen Hubwerkpositionsmesser 8 gemessen und einer zentralen Steuereinheit 9 sowie einem Differenzglied 11 zugeführt. Der Istwert der Zugkraft Fᵢₛₜ wird durch einen Zugkraftmesser 7 erfasst. Zur Aktivierung des Hubwerkzeugs wird zunächst ein Hauptschalter 16 eingeschaltet und zusätzlich kann eine Kraftregelung über einen weiteren Schalter 17 durch das Bedienpersonal am Bedienpult 10 angefordert werden.

Über das Schaltpult 10 wird zunächst vom Bedienpersonal ein Lagesollwert Lₛₒₗₗ durch ein Stellglied 18 vorgegeben, wobei der Lagesollwert Lₛₒₗₗ und der Lageistwert Lᵢₛₜ in einem Differenzglied 11 verglichen und als Regelgröße über ein Schaltelement 21 für die Lageregelung an den Lageregler 4 weitergegeben wird. Über eine Mischwerteinrichtung 13 und eine Steuerleitung 25 wird das Hydrauliksteuerventil gesteuert und Senk- oder Hubbewegungen des Hubwerkzeugs geregelt, bis der Lageistwert Lᵢₛₜ dem Lagesollwert Lₛₒₗₗ entspricht. Dann wird automatisch die in Figur 2 gezeigte Reglerstruktur mit Hilfe der Schaltelemente 21 und 22 auf eine Kraftregelung über einen Kraftregler 5 umgeschaltet.

Diese automatische Umschaltung erfolgt erst, nachdem ohne Eingriffsmöglichkeiten über das Bedienpult 10 eine zentrale Steuereinheit 9 automatisch für eine Zeitspanne t1 oder eine Fahrstrecke S1 eine Kraftmessung veranlasst und einen Triggerimpuls T zu einer Mittelwertbildung an einen Mittelwertbildungsblock 19 weitergegeben hat. Der Mittelwertbildungsblock 19 ermittelt einen Mittelwert oder Gleichanteil der Kraftmessung während der Zeitspanne t1 und/oder während der Fahrtstrecke s1, der einen Sollwert Fₛₒₗₗ für die Kraftregelung bildet. Die Wechselanteile der Kraftmessung werden genutzt, um in dem Filterblock 15 und dem Funktionsblock 14 adaptiv beispielsweise die Empfindlichkeit der Kraftmessung im Kraftregler 5 einzustellen. Der aktuelle Kraftmesswert Fᵢₛₜ wird darüber hinaus mit dem Sollwert Fₛₒₗₗ an einem Differenzierglied 20 verglichen und als eine Regelgröße an den Kraftregler 5 weitergegeben, sobald der Lagesollwert erreicht ist und das Schaltelement 22 für die Kraftregelung automatisch den Kraftregler 5 anschließt.

Solange der Lagesollwert Lₛₒₗₗ beibehalten und nicht durch das Bedienpersonal über das Bedienpult 10 geändert wird, wird nun das Hydraulikventil von dem Kraftregler 5 über die Mischwerteinrichtung 13 und die Steuerleitung 25 gesteuert. Mit dieser Regelstruktur 30 wird folglich erreicht, dass die Bedienung des Hubwerkzeugs vereinfacht wird und dennoch der Regelungskomfort herkömmlicher Anlagen beibehalten bleibt.

### Bezugszeichenliste

- 1: Anordnung
- 2: Hubwerkzeug
- 3: Steuergerät
- 4: Lageregler
- 5: Kraftregler
- 6: Hydraulikventil
- 7: Zugkraftmesser
- 8: Hubwerkspositionsmesser
- 9: zentrale Steuereinheit
- 10: Bedienpult
- 11: Differenzglied
- 12: Hubwerkzylinder
- 13: Mischwerteinrichtung
- 14: Funktionsblock
- 15: Filterblock
- 16: Hauptschalter
- 17: weiterer Schalter
- 18: Stellglied
- 19: Mittelwertbildungsblock
- 20: Differenzierglied
- 21: Schaltelement für Lagerregelung
- 22: Schaltelement für Kraftregelung
- 23: Signalleitung
- 24: Messleitung
- 25: Steuerleitung
- 26: Hydraulikleitung
- 27: mechanische Verbindung
- 28: Verbindung
- 30: Regelstruktur
- Fᵢₛₜ: Zugkraftistwert
- Fₛₒₗₗ: Zugkraftsollwert
- Lᵢₛₜ: Lageistwert
- Lₛₒₗₗ: Lagesollwert
- T: Triggerimpuls

## Patentansprüche

1. Anordnung zur Hubregelung eines Hubwerkzeugs (2) eines Fahrzeugs, wobei die Anordnung (1) aufweist:
ein Steuergerät (3), das einen Lageregler (4) und einen Kraftregler (5) aufweist, die mit einem steuerbaren Hydraulikventil (6) für das Hubwerkzeug (2) zusammenwirken, wobei das Hydraulikventil (6) dem Lage- und dem Kraftregler (4, 5) nachgeschaltet ist und Steuersignale des Lage- und des Kraftreglers (4, 5) in Hubbewegungen des Hubwerkzeugs (2) mittels eines Hubwerkzylinders (12) umsetzt; einen Zugkraftmesser (7) zur Messung der Kraft mit der das Hubwerkzeug (2) gezogen wird;
einen Hubwerkspositionsmesser (8) zur Messung der Lage in der sich das Hubwerkzeug befindet;
wobei das Steuergerät (3) eine zentrale Steuereinheit (9) aufweist, die nach Erreichen eines an einem Bedienpult (10} des Hubwerkzeugs (2) eingestellten Lagesollwert (Lₛₒₗₗ) eine begrenzte Zeit (t1) oder eine begrenzte Fahrstrecke (S1) bei eingeschalteter Kraftregelung automatisch einen mittleren Kraftaufwand durch Mittelwertbildung als Sollwert für die Zugkraft (Fₛₒₗₗ) ermittelt, und wobei das Steuergerät (3) ein Differenzglied (11) aufweist, das als Regelgröße die Differenz zwischen dem Sollwert für die Zugkraft (Fₛₒₗₗ) und einem Istwert (Fᵢₛₜ) des Zugkraftmessers (7) dem Kraftregler (5) zuführt,
**dadurch gekennzeichnet, dass** die zentrale Steuereinheit ausgebildet ist, einen entsprechenden Mittelwert und damit einen Sollwert für den Kraftregler selbsttätig zu ermitteln und automatisch von der Lageregelung in die Kraftregelung zu wechseln.

2. Anordnung nach Anspruch 1, **dadurch gekennzeichnet, dass** das steuerbare Hydraulikventil (6) einer Mischwerteinrichtung (13), die einen Mischwert aus Stellwerten des Lagereglers (4) und Stellwerten des Kraftreglers (5) bildet, nachgeschaltet ist.

3. Anordnung nach Anspruch 1 oder Anspruch 2, **dadurch gekennzeichnet, dass** die Anordnung (1) einen Funktionsblock (14) aufweist, in dem zur Parameteradaption ein jeweiliger Wechselanteil eines Filterblockes (15) der Zugkraftmessung adaptiert und dem Kraftregler (5) über einen Funktionsblock (14) zugeführt wird.

4. Anordnung nach Anspruch 3, **dadurch gekennzeichnet, dass** der Funktionsblock (14) zur Parameteradaption Messwerte eines Schlupfsensors, der vom Schlupf der angetriebenen Räder abhängige Signale generiert, dem Kraftregler (5) zuführt.

5. Anordnung nach einem der vorhergehenden Ansprüche, **dadurch gekennzeichnet, dass** die zentrale Steuereinheit (9) ein Mikroprozessor ist.

6. Anordnung nach einem der vorhergehenden Ansprüche, **dadurch gekennzeichnet, dass** das Bedienpult (10) einen Hauptschalter (16) zur Aktivierung der Lageregelung und einen weiteren Schalter (17) zur Aktivierung der Kraftregelung sowie ein Stellglied (18) zur Einstellung eines Lagesollwertes (Lₛₒₗₗ) aufweist.

7. Anordnung nach Anspruch 6, **dadurch gekennzeichnet, dass** das Stellglied (18) des Bedienpults (10) zur Einstellung des Lagesollwertes (Lₛₒₗₗ) ein Drehpotenziometer oder ein Schiebepotenziometer aufweist.

8. Verfahren zur Hubregelung eines elektrohydraulischen Hubwerkzeugs (2), wobei das Hubwerkzeug (2) vorzugsweise an einem Traktor als Fahrzeug angeordnet ist und einen Hubwerkzylinder (12) aufweist, der über ein verstellbares Hydraulikventil (6) auf Mischwerte eines Lage- und eines Kraftreglers (4, 5) reagiert, wobei das Verfahren folgende Verfahrenschritte aufweist:
Einstellen eines Lagesollwertes (Lₛₒₗₗ) für das Hubwerkzeug (2) an einem Bedienpult (10) unter Aktivieren eines Lagereglers (4); Messen der Hubwerksposition (List) mit einem Hubwerkspositionsmesser (8) und Regeln auf den eingestellten Lagesollwert (Lₛₒₗₗ) durch den Lageregler (4);
Anfordern einer Zugkraftregelung an dem Bedienpult (10);
Mittelwertbildung der Zugkraft mittels Messen der Zugkraft (F) für ein begrenztes Zeitintervall (t1) oder für eine begrenzte Fahrstrecke (S1) nach Erreichen des Lagesollwertes (Lₛₒₗₗ);
Zuführen des automatisch erfassten Mittelwerts der Zugkraft (F) als Sollwert der Zugkraft (Fᵢₛₜ) für den Kraftregler (5);
Differenzbildung zwischen Sollwert (Fₛₒₗₗ) und gemessenem Istwert (Fᵢₛₜ) der Zugkraft als Regelgröße für den Kraftregler (5),
**dadurch gekennzeichnet, dass** das Regelungsverfahren einen entsprechenden Mittelwert und damit einen Sollwert für den Kraftregler selbsttätig ermittelt und automatisch von der Lageregelung in die Kraftregelung wechselt.

9. Verfahren nach Anspruch 8, **dadurch gekennzeichnet, dass** das Regelungsverfahren nach der Mittelwertbildung automatisch von der Lageregelung in die Kraftregelung wechselt.

10. Verfahren nach Anspruch 8 oder Anspruch 9, **dadurch gekennzeichnet, dass** in dem Steuergerät (3) ein Triggerimpuls (T) generiert wird, der nach dem Zeitintervall (t1) oder der Fahrstrecke (S1) zur Messung der Zugkräfte (F) bei erreichter Hubwerksposition die automatische Mittelwertbildung zur Ermittlung eines Gleichanteils und Sollwertes der Zugkraft (Fₛₒₗₗ) auslöst.

11. Verfahren nach einem der Ansprüche 8 bis 10, **dadurch gekennzeichnet, dass** eine Parameteradaption der Wechselanteile der Zugkraft (F) durchgeführt und dem Kraftregler (5) zugeführt wird.

## Claims

1. Arrangement for controlling the stroke of a lifting implement (2) of a vehicle, wherein the arrangement (1) has:
a control device (3) which has a position controller (4) and a force controller (5) which interact with a controllable hydraulic valve (6) for the lifting implement (2), wherein the hydraulic valve (6) is connected downstream of the position controller (4) and the force controller (5) and converts control signals of the position controller (4) and of the force controller (5) into stroke movements of the lifting implement (2) by means of a lifting mechanism cylinder (12);
a pulling force measuring device (7) for measuring the force with which the lifting implement (2) is pulled;
a lifting mechanism position measuring device (8) for measuring the position at which the lifting implement is located;
wherein the control device (3) has a central control unit (9) which, after a position setpoint value (Lₛₑₜₚ) which is set at an operator control console (10) of the lifting implement (2), is reached, determines for a limited time (t1) or a limited distance (S1) when the force control is switched on, automatically determines an average force application by forming average values as a setpoint value for the pulling force (Fₛₑₜₚ) and wherein the control device (3) has a difference-forming element (11) which feeds the difference, as a controlled variable, between the setpoint value for the pulling force (Fₛₑₜₚ) and an actual value (F_{act}) of the pulling force measuring device (7) to the force controller (5),
**characterized in that** the central control unit is designed to automatically determine a corresponding average value and therefore setpoint value for the force controller and automatically change over from position control to force control.

2. Arrangement according to Claim 1, **characterized in that** the controllable hydraulic valve (6) is connected downstream of a mixed value device (13) which forms a mixed value from actuating values of the position controller (4) and actuating values of the force controller (5).

3. Arrangement according to Claim 1 or Claim 2, **characterized in that** the arrangement (1) has a function block (14) in which, for the purpose of parameter adaptation, a respective alternating component of a filter block (15) of the pulling force measurement is adapted and fed to the force controller (5) via a function block (14).

4. Arrangement according to Claim 3, **characterized in that** for the purpose of parameter adaptation the function block (14) feeds measured values of a slip sensor, which generates signals dependent on the slip of the driven wheels, to the force controller (5).

5. Arrangement according to one of the preceding claims, **characterized in that** the central control unit (9) is a microprocessor.

6. Arrangement according to one of the preceding claims, **characterized in that** the operator control console (10) has a main switch (16) for activating the position control and a further switch (17) for activating the force control as well as an actuating element (18) for setting a position setpoint value (Lₛₑₜₚ).

7. Arrangement according to Claim 6, **characterized in that** the actuating element (18) of the operator control console (10) has a rotational potentiometer or a sliding potentiometer for setting the position setpoint value (Lₛₑₜₚ) .

8. Method for controlling the stroke of an electrohydraulic lifting implement (2), wherein the lifting implement (2) is preferably arranged on a tractor as a vehicle and has a lifting mechanism cylinder (12) which reacts to mixed values of a position controller (4) and of a force controller (5) via an adjustable hydraulic valve (6), wherein the method has the following method steps:
setting of a position setpoint value (Lₛₑₜₚ) for the lifting implement (2) on an operator control console (10) by activating a position controller (4); measuring the lifting mechanism position (L_{act}) with a lifting mechanism position measuring device (8) and adjusting to the set position setpoint value (Lₛₑₜₚ) by means of the positioning controller (4);
requesting control of the pulling force and the operator control console (10);
forming average values of the pulling force by measuring the pulling force (F) for a limited time interval (t1) or for a limited distance (S1) after the position setpoint value (Lₛₑₜₚ) is reached;
feeding the automatically sensed average value of the pulling force (F) as a setpoint value of the pulling force (F_{act}) for the force controller (5); and
forming differences between the setpoint value (Fₛₑₜₚ) and the measured actual value (F_{act}) of the pulling force as a controlled variable for the force controller (5),
**characterized in that** the control method automatically determines a corresponding average value and therefore a setpoint value for the force controller and automatically changes over from position control to force control.

9. Method according to Claim 8, **characterized in that** after the formation of average values the control method changes over automatically from position control to force control.

10. Method according to Claim 8 or Claim 9, **characterized in that** in the control device (3) a trigger pulse (T) is generated which, in order to measure the pulling forces (F) when the lifting mechanism position is reached, triggers the automatic formation of average values for the determination of a direct component and setpoint value of the pulling force (Fₛₑₜₚ) after the time interval (t1) or the distance (S1).

11. Method according to one of Claims 8 to 10, **characterized in that** parameter adaptation of the alternating components of the pulling force (F) is carried out and is fed to the force controller (F).

## Revendications

1. Ensemble de régulation de la course d'un outil de levage (2) d'un véhicule, l'ensemble (1) comprenant:
un appareil de commande (3) qui présente un régulateur de position (4) et un régulateur de force (5) qui coopère avec une soupape hydraulique asservie (6) de l'outil de levage (2),
la soupape hydraulique (6) étant raccordée en aval du régulateur de position et du régulateur de force (4, 5) et convertissant les signaux de commande du régulateur de position et du régulateur de force (4, 5) en déplacement de levage de l'outil de levage (2) au moyen d'un vérin (12) du mécanisme de levage,
un dispositif (7) de mesure de la force de traction, qui mesure la force qui tire l'outil de levage (2) et
un dispositif (8) de position du mécanisme de levage qui mesure la position dans laquelle l'outil de levage se trouve,
l'appareil de commande (3) présentant une unité centrale de commande (9) qui, après qu'une valeur de consigne de position (Lₛₒₗₗ), une durée limitée (t1) ou un déplacement limité (S1) ont définis sur un pupitre de commande (10) de l'outil de levage (2), détermine automatiquement, la régulation de force étant branchée, l'application d'une force moyenne par formation d'une valeur moyenne qui sert de valeur de consigne pour la force de traction (Fₛₒₗₗ),
l'appareil de commande (3) présentant un organe (11) de formation de différence qui délivre comme grandeurs de régulation la différence entre la valeur de consigne de la force de traction (Fₛₒₗₗ) et la valeur effective (Fᵢₛₜ) du dispositif (7) de mesure de force de traction au régulateur de force (5),
**caractérisé en ce que**
l'unité centrale de commande est configurée pour déterminer d'elle-même une valeur moyenne appropriée et donc une valeur de consigne pour le régulateur de force et pour commuter automatiquement de la régulation de position à la régulation de force.

2. Ensemble selon la revendication 1, **caractérisé en ce que** la soupape hydraulique asservie (6) est disposée en aval d'un dispositif (13) de formation de valeur mixte qui forme une valeur mixte à partir des valeurs de réglage du régulateur de position (4) et des valeurs de réglage du régulateur de force (5).

3. Ensemble selon la revendication 1 ou la revendication 2, **caractérisé en ce que** l'ensemble (1) présente un bloc fonctionnel (14) dans lequel une fraction variable d'un bloc de filtration (15) de la mesure de la force de traction est adaptée pour adapter les paramètres et est délivrée au régulateur de force (5) par l'intermédiaire d'un bloc fonctionnel (14).

4. Ensemble selon la revendication 3, **caractérisé en ce que** pour l'adaptation des paramètres, le bloc fonctionnel (14) apporte au régulateur de force (5) des valeurs de mesure d'un détecteur de patinage qui délivre des signaux qui dépendent du patinage des roues motrices.

5. Ensemble selon l'une des revendications précédentes, **caractérisé en ce que** l'unité centrale de commande (9) est un microprocesseur.

6. Ensemble selon l'une des revendications précédentes, **caractérisé en ce que** le pupitre de commande (10) présente un commutateur principal (16) qui active la régulation de position et un deuxième commutateur (17) qui active la régulation de force, ainsi qu'un organe de commande (18) qui définit une valeur (Lₛₒₗₗ) de consigne de position.

7. Ensemble selon la revendication 6, **caractérisé en ce que** l'organe de commande (18) du pupitre de commande (10) présente un potentiomètre rotatif ou un potentiomètre coulissant qui définissent la valeur (Lₛₒₗₗ) de la position de consigne.

8. Procédé de régulation du levage d'un outil électrohydraulique de levage (2),
l'outil de levage (2) étant de préférence disposé sur un véhicule configuré comme tracteur et un vérin (12) de mécanisme de levage qui réagit à des valeurs mixtes d'un régulateur de position et d'un régulateur de force (4, 5) par l'intermédiaire d'une soupape hydraulique réglable (6),
le procédé comportant les étapes suivantes:
définition d'une valeur (Lₛₒₗₗ) de position de consigne de l'outil de levage (2) sur un pupitre de commande (10) par activation d'un régulateur de position (4),
mesure de la position (Lᵢₛₜ) du mécanisme de levage à l'aide d'un dispositif (8) de mesure de position du mécanisme de levage et régulation à la valeur réglée (Lₛₒₗₗ) de consigne de position par le régulateur de position (4),
demande d'une régulation de la force de traction sur le pupitre de levage (10),
formation d'une valeur moyenne de la force de traction par mesure de la force de traction (F) pendant un intervalle de temps (t1) limité ou sur une distance (S1) limitée après que la valeur (Lₛₒₗₗ) de consigne de position a été atteinte,
transfert de la valeur moyenne, détectée automatiquement, de la force de traction (F) au régulateur (5) en tant que valeur de consigne de la force de traction (Fᵢₛₜ),
formation de la différence entre la valeur de consigne (Fₛₒₗₗ) et la valeur effective mesurée (Fᵢₛₜ) de la force de traction comme grandeur de régulation du régulateur de force (5),
**caractérisé en ce que**
le procédé de régulation détermine de lui-même une valeur moyenne appropriée et donc une valeur de consigne pour le régulateur de force et commute automatiquement de la régulation de position à la régulation de force.

9. Procédé selon la revendication 8, **caractérisé en ce que** le procédé de régulation commute automatiquement de la régulation de position à la régulation de force après la formation de la valeur moyenne.

10. Procédé selon la revendication 8 ou la revendication 9, **caractérisé en ce qu'**une impulsion de gâchette (T) qui, après l'intervalle de temps (t1) ou la distance parcourue (S1) est formée dans l'appareil de commande (3) pour mesurer les forces de traction (F) lorsque la position du mécanisme de levage a été atteinte, déclenche automatiquement la formation d'une valeur moyenne pour déterminer une fraction constante et la valeur de consigne de la force de traction (Fₛₒₗₗ).

11. Procédé selon l'une des revendications 8 à 10, **caractérisé en ce qu'**une adaptation des paramètres des fractions alternées de la force de traction (F) est réalisée et délivrée au régulateur de force (5).
